# EUROPÄISCHE PATENTSCHRIFT

(11) **EP 0 734 976 B1**
(45) Veröffentlichungstag und Bekanntmachung des Hinweises auf die Patenterteilung: **11.08.1999**
(21) Anmeldenummer: 96105100.0
(22) Anmeldetag: 29.03.1996
(51) Int. Cl.: B65G 19/02, B65G 35/06, B65G 17/00

(54) **Leichtgutfördereinrichtung**
Conveyor for materials of light weight
Convoyeur pour matériaux légers

(30) Priorität: 31.03.1995 DE 19512141
(43) Veröffentlichungstag der Anmeldung: 02.10.1996
(73) Patentinhaber: Hafner, Josef, Dr. Ing., 86899 Landsberg/Lech (DE)
(72) Erfinder: Hafner, Josef, Dr. Ing., 86899 Landsberg/Lech (DE)
(74) Vertreter: Solf, Alexander, Dr.

(56) Entgegenhaltungen:
- DE-B- 1 192 103
- US-A- 4 696 236

## Beschreibung

Die Erfindung betrifft eine staubare Leichtgutfördereinrichtung gemäß dem Oberbegriff des Anspruchs 1.

Leichtgutfördereinrichtungen der erfindungsgemäßen Art, die Leichtgut, wie z.B. Bekleidungsstücke, in einem innerbetrieblichen Fördersystem oder Spulen in einer Spinnerei transportieren, weisen Schienensysteme auf, auf denen oder - im Falle eines hängenden Transports - an denen eine Vielzahl von Stückgutträgern als modulare Betriebsmittel, z.B. in Form von Trolleys oder Wagen, abrollen. Dem Schienensystem sind Antriebsmittel zugeordnet, die an einem Betriebsmittel angreifen können und das Betriebsmittel längs des Schienensystems verfahren. Zur Staubildung werden die Betriebsmittel aufeinandergefahren und zur Auflösung des Staus jeweils das im Stau vordere Betriebsmittel taktweise abtransportiert.

In der DE-PS 12 56 153 ist eine Förderanlage mit einer Fahrrinne und einem in der Fahrrinne geführten Förderband beschrieben. In der Fahrrinne befindet sich ein mit Rädern versehener Förderbehälter, der an seinen Stirnseiten jeweils ein um eine Lagerachse schwenkbares Kupplungselement aufweist. Beim Auffahren auf ein Hindernis wird dieses Kupplungselement aus einer mit dem Förderband in Eingriff stehenden Stellung ausgeschwenkt, so daß dieses Kupplungselement nicht mehr in Eingriff mit dem Förderband ist. Die beiden an einem solchen Förderbehälter vorgesehenen Kupplungselemente sind symmetrisch ausgebildet, wobei jedes der beiden Kupplungselemente nur in eine Richtung eine für eine Mitnahme ausreichende Reibkopplung bewirkt. Bei einer Entkopplung des in Fahrtrichtung vorderen Kupplungselementes kann somit das Förderband an dem in Fahrtrichtung hinteren Kupplungselement entlanggleiten, wobei nur eine geringere Reibkraft erzeugt wird.

Aus der DE-PS 11 92 103 geht eine Förderbahn für Fließfertigungsanlagen hervor, die auf der Förderbahn geführte Tragplatten aufweist, wobei die Tragplatten jeweils mit einem Zahnrad mit einer in der Förderbahn umlaufend geführten Kette in Eingriff stehen. Ein an der Tragplatte gelagerter Kupplungsarm wird beim Auffahren auf eine schräge Rampe nach oben ausgelenkt, so daß er aus einer In-Eingriffstellung mit dem Zahnrad ausgerückt wird und dieses sich frei drehen kann. Die Tragplatten weisen an ihrer in Förderrichtung hinteren Seite schräg abfallende Rampen auf, so daß durch das Anhalten einer Tragplatte mehrere nachfolgende Tragplatten aufgestaut werden können.

Ferner ist in der DE 39 26 755 A1 eine Förderanlage zur Beförderung von Werkstückträgern beschrieben, wobei die Unterseite der Werkstückträger längs zur Förderbahn verschwenkbare Tragarme aufweist, an deren unterem Ende eine Reibplatte so befestigt ist, daß sich deren Mitnahme durch das Transportband selbsttätig verstärkt. An seinem in Fahrtrichtung vorderen Ende weist der Werkstückträger einen Stößel auf, der beim Auffahren auf ein Hindernis die Reibplatte aus der In-Eingriffstellung mit dem Förderband ausschwenkt.

Aufgabe der Erfindung ist es, eine staubare Leichtgutfördereinrichtung zu schaffen, die eine geringe Antriebsleistung erfordert und einen minimalen Staudruck selbst bei sehr langen Staustrecken erzeugt und insbesondere eine geordnete Stauauflösung ermöglicht. Insbesondere aber soll die Leichtgutfördereinrichtung bei der Stauauflösung geringe Anfahrkräfte erfordern.

Diese Aufgabe wird durch die Merkmale des Anspruchs 1 gelöst. Vorteilhafte Weiterbildungen der Erfindung sind in den Unteransprüchen gekennzeichnet.

Die erfindungsgemäße Leichtgutfördereinrichtung kann modular ausgebildet und automatisiert sein. Die zu transportierenden Fördergüter weisen z.B. ein Gewicht bis zu 10 kg auf.

Im Prinzip arbeitet die erfindungsgemäße Leichtgutfördereinrichtung nach Anspruch 1 auf der Basis des Reibkontakts zwischen einem dauernd angetriebenen Band und arretierten Rollen des Betriebsmittels während der Mitnahme bzw. des Transports, sowie auf der Basis des Kontakts des angetriebenen Bandes mit frei drehenden Rollen während des Staus. In der erfindungsgemäßen Leichtgutfördereinrichtung kann sich aufgrund der vollständigen Entkopplung vom Band nur ein sehr geringer Staudruck selbst bei sehr langen Staustrecken aufbauen. Dabei kann das Band in der Förderstrecke angeordnet sein.

Wesentlich in Kombination mit der Rollen-Reibbandeinrichtung ist, daß zudem eine Einrichtung einfacher Bauart vorgesehen ist, die bei der Auflösung eines Staus, bei dem die Betriebsmittel aneinandergefahren stillstehen, eine Vereinzelung der Betriebsmittel, d.h. ein Anfahren jeweils nur des vorderen Betriebsmittels, ermöglicht, ohne daß der ohnehin sehr geringe Staudruck erhöht wird. Dies gelingt z.B. durch eine bei der Staubildung in Funktion tretende Auffahrentarretierungseinrichtung für die Rollen des Betriebsmittels, die beim Anfahren des Betriebsmittels die Einschaltung der Arretierung der Rollen bewirkt, wenn zwischen dem anfahrenden Betriebsmittel und dem nachfolgenden Betriebsmittel ein bestimmter Abstand hergestellt ist. Auf diese Weise wird der Antrieb der Leichtgutfördereinrichtung bei der Auflösung des Staus immer nur mit der Mitnahmereibkraft eines Betriebsmittels beaufschlagt, so daß die erfindungsgemäße Leichtgutfördereinrichtung insgesamt mit einer relativ schwachen Antriebsleistung auskommt.

Nach der Erfindung tritt somit der Antriebsmechanismus des im Stau auffahrenden Betriebsmittels beim Auffahren außer Eingriff. Beim Wegfahren des vorderen Betriebsmittels aus dem Stau wird erfindungsgemäß der Antriebsmechanismus des nachfahrenden Betriebsmittels durch die Einschaltung der Arretiereinrichtung zeitverzögert aktiviert, so daß alle Betriebsmittel mit Abstand anfahren und folgen. Demgemäß arbeitet die neue Leichtgutfördereinrichtung mit einem erheblich besseren Wirkungsgrad als alle bekannten Leichtgutfördereinrichtungen.

Die Reibkräfte des Antriebsmechanismus können bei der erfindungsgemäßen Leichtgutfördereinrichtung so gewählt werden, daß auch Steigungen und Gefälle durchfahren werden können, wobei sie auch durch zusätzlichen Andruck von oben unterstützt werden können.

Die Verwendung der erfindungsgemäßen Leichtgutfördereinrichtung ist insbesondere günstig bei Anlagen mit langen Staustrecken bzw. in Pufferanlagen mit hohem Füllungsgrad. Die erfindungsgemäße Leichtgutfördereinrichtung zeichnet sich insbesondere durch einen geringen Leistungsbedarf, geringen anlagentechnischen Aufwand und geringen Energieverbrauch aus. Darüber hinaus ist die erfindungsgemäße Leichtgutfördereinrichtung verschleißarm.

Ein tragender Gedanke der Erfindung liegt darin, ein gestopptes Betriebsmittel jeweils durch das vorausfahrende Betriebsmittel zeitverzögert zum Anfahren freizuschalten.

Dieses Grundprinzip ist auch bei Hängefördersystemen anwendbar, wobei die Laufflächen und das Zugmittel auch auf unterschiedlichen Ebenen angeordnet werden können.

Gemäß der Ausführungsform nach Anspruch 11 sind die Wagen der Leichtgutfördereinrichtung zweiteilig aus einem Antriebswagen und einem Transportwagen ausgebildet, so daß der an ein Zugmittel koppelbare Antriebswagen nicht durch das Gewicht des zu befördernden Gutes belastet wird.

Ist ein Wagen an das Zugmittel angekoppelt, so wird das Zugmittel nur durch die durch das Gewicht des Antriebswagens vorgegebene Kraftkomponente belastet. Die Belastung des Zugmittels ist somit unabhängig vom Gewicht des zu transportierenden Gutes, so daß die zwischen dem Zugmittel und deren Unterlage auftretende Reibkraftkomponente selbst bei Einkopplung einer Vielzahl von mit einem zu transportierenden Gut belasteten Wagen gering ist, wodurch die notwendige Antriebsleistung gering gehalten wird.

Zudem ermöglicht die separate Ausbildung als Antriebswagen und Transportwagen, daß die Wagen bezüglich Unebenheiten am Zugmittel bzw. an ihren Auflageflächen unempfindlich sind, da jeweils nur ein Wagen die Unebenheiten ausgleichen muß.

Das erfindungsgemäße Prinzip läßt sich auf fast alle bekannten Leichtgutfördereinrichtungen übertragen. Beispielhaft sind in der Zeichnung besonders geeignete Betriebsmittel abgebildet und anhand dieser Abbildung die Erfindung im folgenden näher erläutert. Es zeigen:
- Fig. 1: schematisch eine Seitenansicht eines erfindungsgemäßen Betriebsmittels in einer Betriebsstellung während des Transports,
- Fig. 2: schematisch eine Seitenansicht des erfindungsgemäßen Betriebsmittels nach Fig. 1 in einer Betriebsstellung während des Staus.
- Fig. 3: schematisch einen vertikalen Längsschnitt durch ein zweites Ausführungsbeispiel eines erfindungsgemäßen Betriebsmittels;
- Fig. 4: schematisch einen horizontalen Querschnitt durch das erfindungsgemäße Betriebsmittel nach Fig. 3 entlang der Linie I-I mit Blickrichtung in Pfeilrichtung;
- Fig. 5: schematisch einen vertikalen Querschnitt durch das erfindungsgemäße Betriebsmittel nach Fig. 3 entlang der Linie II-II mit Blickrichtung in Pfeilrichtung;
- Fig. 6: schematisch eine Seitenansicht im Längsschnitt durch eine weitere Ausführungsform eines Betriebsmittels in einer Betriebsstellung während eines Staus;
- Fig. 7: schematisch einen Schnitt längs der Linie A-A in Fig. 6 mit Blickrichtung in Pfeilrichtung;
- Fig. 8: schematisch einen Schnitt längs der Linie B-B in Fig. 6 mit Blickrichtung in Pfeilrichtung;
- Fig. 9: schematisch eine Draufsicht auf eine Weiche;
- Fig. 10: schematisch einen Schnitt längs der Linie C-C in Fig. 9 mit Blickrichtung in Pfeilrichtung;
- Fig. 11: schematisch einen Schnitt längs der Linie D-D in Fig. 10 mit Blickrichtung in Pfeilrichtung.

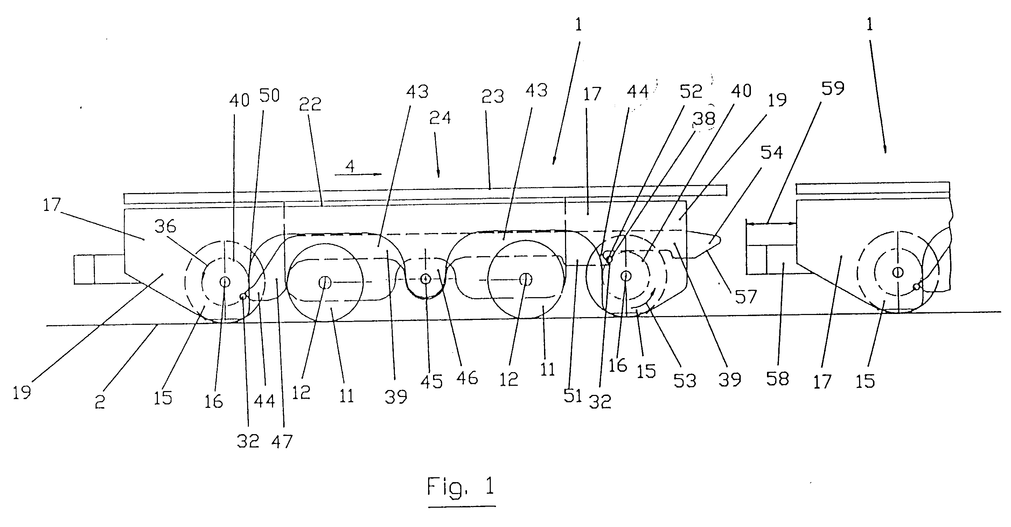

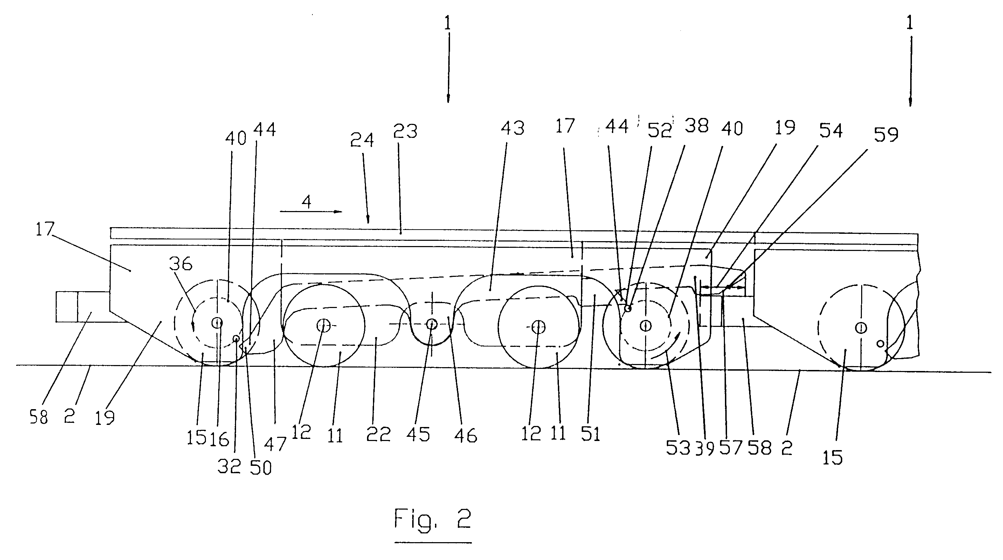

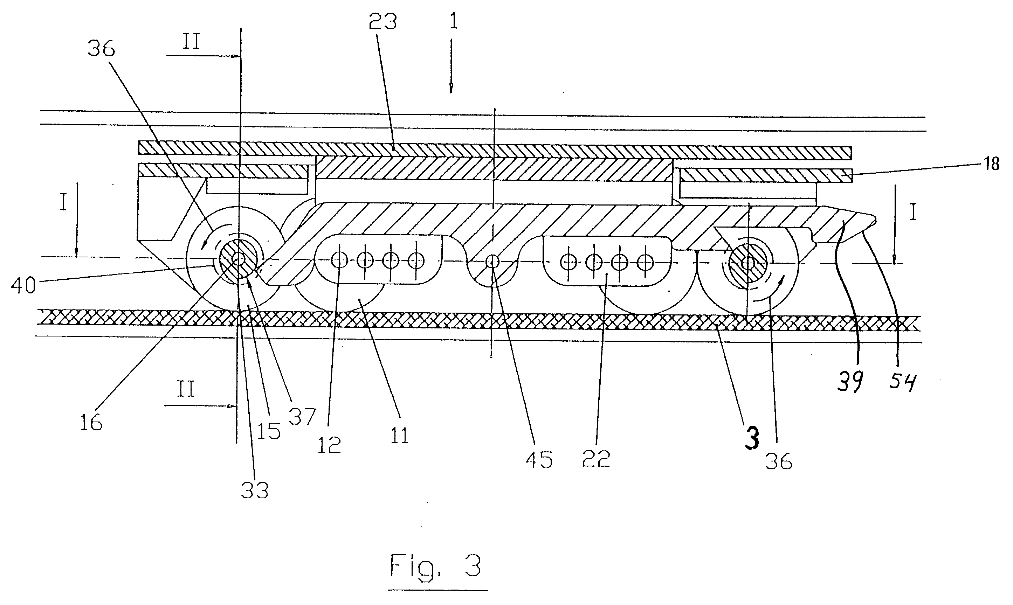

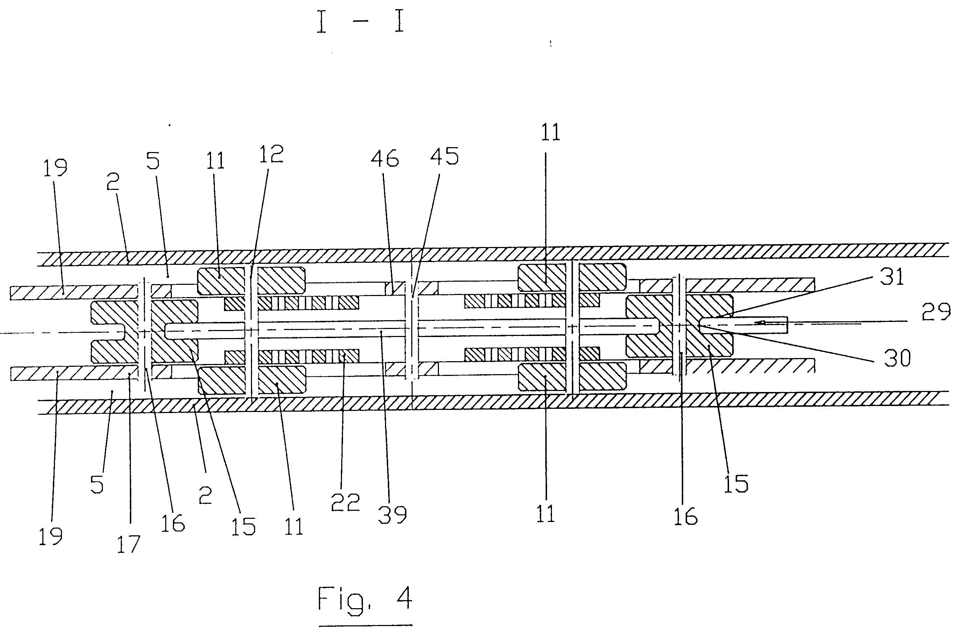

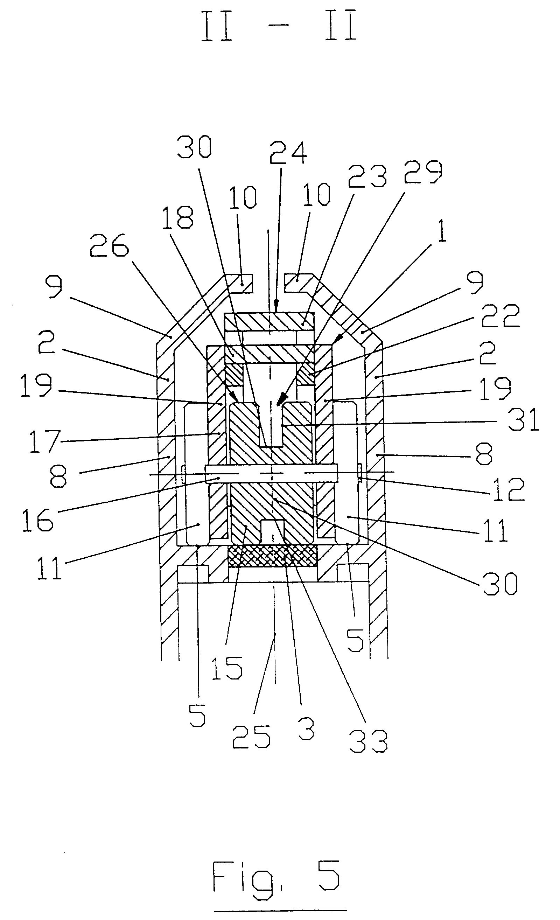

Eine erste Ausführungsform der erfindungsgemäßen Leichtgutfördereinrichtung ist in den Fig. 1 bis 5 dargestellt. Sie weist als Betriebsmittel Wagen 1 auf, die auf Schienen 2 verfahrbar sind. Entlang der Schienen 2 wird als Zugmittel ein nach unten abgestütztes Band 3 geführt, das kontinuierlich angetrieben wird, und an das sich die Wagen 1 durch Reibineingriffnahme ankoppeln können, um vom Band entlang der Schienen 2 in Fahrtrichtung (Pfeil 4) gezogen zu werden.

Das Band 3 ist zwischen zwei Schienen 2 angeordnet, die seitlich mit jeweils einer horizontalen, schmalen Lauffläche 5 für die Wagen 1 an das Band 3 angrenzen. Die Oberseiten der Laufflächen 5 und die Oberseite des Bandes 3 sind auf gleicher Höhe angeordnet, so daß sie in einer Ebene liegen und eine glatte durchgehende Fläche bilden.

Zur Führung der Wagen 1 weisen die Schienen 2 seitliche, sich nach oben erstreckende Wände 8 auf, die in ihrem oberen Randbereich 9 schräg nach innen verlaufen und mit Abstand zueinander an ihrem oberen Rand 10 enden, so daß zu beförderndes Leichtgut von oben durch den Zwischenraum zwischen den oberen Rändern 10 auf die Wagen 1 aufgebracht werden kann. Die Wagen werden durch die Wände 8 der Schiene 2 seitlich geführt und durch die oberen nach innen gebogenen Randbereiche 9 auf den Laufflächen 5 der Schienen 2 gehalten. Die seitliche Führung kann durch am Wagen 1 an einer vertikalen Achse gelagerte Führungsrollen unterstützt werden.

Die Wagen 1 liegen auf den Laufflächen 5 der Schienen 2 mit vier Laufrollen 11 auf, die jeweils paarweise an einer horizontalen Achse 12 befestigt sind und sich frei drehen können. Die Mitnahme der Wagen 1 wird durch Mitnahmerollen 15 bewirkt, die am Wagen 1 an weiteren horizontalen Achsen 16 gelagert sind.

Der Wagen 1 ist aus einem U-förmigen, nach unten offenen Antriebswagen 17 aufgebaut, mit einer Deckenwandung 18 und zwei Seitenwandungen 19, wobei an den in Fahrtrichtung vorderen bzw. hinteren Enden jeweils eine der Mitnahmerollen 15 zwischen den Seitenwandungen 19 des Antriebswagens 17 gelagert ist. Die Dekkenwandung 18 ist nur im Bereich des vorderen bzw. hinteren Ende des Antriebswagens 17 ausgebildet, so daß der Antriebswagen 17 im mittigen Bereich nach oben hin offen ist. In dem nach oben hin offenen Bereich des Antriebswagens 17 ist ein im Querschnitt U-förmiger, nach unten offener Transportwagen 22 eingesetzt, an dem die Laufrollen 11 mit ihren Achsen 12 gelagert sind. Die Breite des Transportwagens 22 ist schmaler als die des Antriebswagens 17, so daß er zwischen den Seitenwandungen 19 des Antriebswagens 17 mit etwas Spiel sitzt und senkrecht zum Band 3 ausweichen kann. Die Laufrollen 11 sind außen am U-förmigen Transportwagen 22 angeordnet, so daß sie bezüglich der Mitnahmerollen 15 seitlich nach außen versetzt sind und nicht auf dem Band 3 aufliegen.

Das Vorsehen jeweils einer Mitnahmerolle 15 am vorderen bzw. hinteren Ende des Wagens 1 ermöglicht einen kontinuierlichen Übergang über einen Zwischenraum zwischen zwei hintereinander angeordneten Bändern 3.

Der Transportwagen 22 ist höher als der Antriebswagen 17, so daß er nach oben über den Antriebswagen 17 vorsteht. An der Oberseite des Transportwagens 22 ist eine Tragplatte 23 ausgebildet, die sich über die gesamte Länge des Antriebswagens 17 erstreckt und in Fahrtrichtung nach vorne etwas am Antriebswagen 17 übersteht. Die Tragplatte 23 bildet mit ihrer Oberseite eine Transportfläche 24 zur Aufnahme der zu transportierenden Leichtgüter.

Die Aufteilung des Wagens 1 in Antriebswagen 17 und Transportwagen 22 bewirkt, daß das Gewicht des zu befördernden Guts nur auf dem Transportwagen 22 und nicht auf dem Antriebswagen 17 aufliegt, so daß das Band 3 durch das zu transportierende Gut nicht direkt mit seinem Gewicht belastet wird. Hierdurch wird die Reibung zwischen dem Band 3 und seiner Auflagefläche gering gehalten.

Zudem ermöglicht die separate Ausbildung in Antriebswagen 17 und Transportwagen 22, daß der Wagen 1 bezüglich Unebenheiten am Band 3 bzw. an den Laufflächen 5 unempfindlich ist, da jeweils nur einer der Wagen 17, 22 die Unebenheiten ausgleichen muß, und nicht der Wagen 1 in seiner Gesamtheit den Unebenheiten ausweichen muß. Derartige Unebenheiten können durch Toleranzen an den entsprechenden Werkstücken oder durch Verschmutzungen verursacht sein.

In einer vereinfachten Ausführungsform, die von diesem Prinzip der Lasttrennung Gebrauch macht, kann der Antriebswagen ohne zuschaltbare Koppeleinrichtung zum Koppeln an das Zugmittel bzw. nur mit einem Schleifelement ausgebildet sein, das permanent am Zugmittel in Reibkontakt steht.

Die beiden am Antriebswagen 17 gelagerten Mitnahmerollen 15 sind symmetrisch zu einer vertikalen Quermittenebene 25 des Wagens 1 angeordnet, so daß sie auf dem mittig zwischen den Schienen 2 geführten Band 3 aufliegen. Sie sind für eine Reibineingriffnabme bzw. für einen Reibkontakt mit dem Band 3 feststellbar bzw. arretierbar, so daß ihre Drehbarkeit behindert ist und die Bewegung des Bandes 3 durch einen Reibschluß zwischen dem Band 3 und einer Mantel- bzw. Lauffläche 26 der beiden arretierten Mitnahmerollen 15 auf den Wagen 1 übertragen wird.

Wird die Arretierung der Mitnahmerollen 15 gelöst, so drehen sich die Mitnahmerollen 15 frei und das Band 3 wird unter dem Wagen 1 hindurchgezogen, ohne daß eine zur Mitnahme des Wagens 1 ausreichende Kraftkomponente vom Band 3 auf den Wagen 1 übertragen wird. Der Wagen 1 wird somit durch Lösen der Arretierung der Mitnahmerollen 15 vom Antrieb durch das Band 3 vollständig entkoppelt.

Die Mitnahmerollen 15 weisen von ihrer Mantelfläche 26 ausgehend eine Ringnut 29 auf, die konzentrisch um ihre Achse 16 und quermittig eingebracht ist, wobei die Ringnut 29 einen Nutboden 30 und zwei vertikale Nutwände 31 bildet.

Am Nutboden 30 ist als Arretierelement 32 ein nach außen vorstehender Vorsprung 33 ausgebildet, der entgegen der Drehrichtung (Pfeil 26) der Mitnahmerolle 15 zur Bildung einer Flanke 37 etwas hinterschnitten ist. Als Arretierelement 32 kann aber auch ein Stift bzw. Pin 38 vorgesehen sein, der sich in der Ringnut 29 senkrecht zu den beiden Nutwänden 31 erstreckt und mit Abstand zum Nutboden 30 angeordnet ist.

Das Arretierelement 32 steht mit einem Kipphebel 39 in funktioneller Verbindung, indem er zwischen einer die Mitnahmerollen 15 arretierenden und einer die Mitnahmerollen 15 nicht arretierenden Stellung verschwenkt werden kann, wobei der Kipphebel 39 in der die Mitnahmerollen 15 arretierenden Stellung in die Umfangsnut 29 soweit eintaucht, daß er in eine bei einer Drehung der Mitnahmerolle 15 durch das Arretierelement 32 beschriebenen Umlaufbahn 40 eingreift, so daß das Arretierelement 32, 33 bzw. 38 gegen den Kipphebel 39 stoßen kann und so die Bewegung des Arretierelements 32 und dadurch die Mitnahmerolle 15 blockiert bzw. arretiert.

Der Kipphebel 39 ist aus einem geraden, langgestreckten, flachstabförmigen Grundkörper 43 ausgebildet, der sich zwischen den Mitnahmerollen 15 erstreckt und zwei Eingriffsbereiche 44 aufweist, die derart bemaßt sind, daß sie jeweils in eine Ringnut 29 der Mitnahmerollen 15 eingreifen können, um die Mitnahmerollen 15 arretieren zu können.

Der Kipphebel 39 ist im Bereich der Längsmitte des Wagens 1 mittels einer horizontalen, quer zur Längsrichtung des Wagens 1 angeordneten Kipphebelachse 45 schwenkbar gelagert. Die Kipphebelachse 45 ist etwa auf der Höhe der Achsen 12, 16 der Rollen 11, 15 gelagert. Der Grundkörper 43 des Kipphebels 39 ist oberhalb der Achsen 12, 16, 45 angeordnet, wobei ein Lagerbock 46 sich vom Kipphebel 39 nach unten zur Kipphebelachse 45 erstreckt und von dieser durchsetzt wird, wobei der Kipphebel 39 schwenkbar gelagert ist. Die Eingriffsbereiche 44 sind vorzugsweise symmetrisch um die Kipphebelachse 45 angeordnet, so daß sich in der arretierenden Stellung des Kipphebels 39 die an den Mitnahmerollen 15 auftretenden Arretierungskräfte kompensieren.

Da sich die Mitnahmerollen 15 am vorderen bzw. hinteren Ende des Wagens 1 befinden, erstreckt sich der Kipphebel 39 über einen Großteil der Längserstreckung des Wagens 1, so daß bereits bei einem kleinen Schwenkwinkel ein relativ langer Schwenkweg der jeweils im Endbereich des Kipphebels 39 vorgesehenen Eingriffsbereiche 44 bewirkt wird, wodurch ein sicheres Umschalten zwischen der die Mitnahmerollen 15 arretierenden und der die Mitnahmerollen 15 nicht arretierenden Stellung gewährleistet werden kann.

Am in Fahrtrichtung hinteren Eingriffsbereich 44 ist ein am Kipphebel 39 nach unten weisender Schenkel 47 vorgesehen, der das Arretierelement 32 in der arretierenden Stellung (Fig. 1) von oben mit einer spitzen, in Fahrtrichtung nach hinten zeigenden Arretiernase 50 hintergreift. Bei einer Schwenkbewegung in die nicht arretierende Stellung wird die Arretiernase 50 nach unten und in Fahrtrichtung aus der Umlaufbahn 40 des Arretierelementes 32 herausgeschwenkt, so daß sich die Mitnahmerolle 15 frei drehen kann.

Der in Fahrtrichtung vordere Eingriffsbereich 44 weist eine schmale Arretiernase 51 auf. Die Arretiernase 51 erstreckt sich vom Grundkörper 43 des Kipphebels 39 nach unten, wobei sie sich im oberen Bereich der Mitnahmerolle 15 in die Ringnut 29 erstreckt. Mit seinem in Fahrtrichtung vorderen Ende bildet die Arretiernase 51 eine kurze, schräg hinterschnittene Arretierkante 52. In der arretierenden Stellung des Kipphebels 39 verläuft somit die Arretiernase 51 in die Umfangsnut 29 im oberen Bereich der Mitnahmerolle 15, wobei sich die Arretierkante 52 in der Umlaufbahn 40 des entsprechenden Arretierelementes 32 befindet. Das Arretierelement 32 schlägt somit bei einer Drehung der Umlaufrolle 15 in Rückwärtsrichtung (Pfeil 53) an der Arretierkante 52 an und arretiert bzw. blockiert die Mitnahmerolle 15 gegen ein weiteres Drehen in Rückwärtsrichtung, so daß eine Reibmitnahme mit dem Band 3 bewirkt wird.

Die Arretierkante 52 bzw. die Flanke 37 der Arretierelemente 32 sind etwa radial zur jeweiligen Achse 16 mit einem leichten Hinterschnitt ausgerichtet, so daß der Kipphebel 39 bei Anlage an den Arretierelementen 32 in der die Mitnahmerollen 15 arretierenden Stellung fixiert wird.

Bei einer Schwenkbewegung des Kipphebels 39 aus seiner arretierenden, horizontalen Stellung wird dieser mit seinem in Fahrtrichtung vorderen Eingriffsbereich 44 nach oben geschwenkt, so daß der Arretiersteg 51 mit seiner Arretierkante 52 aus der Umlaufbahn 40 des entsprechenden Arretierelementes 32 bewegt wird und sich die darunter angeordnete Mitnahmerolle 15 frei drehen kann.

Das in Fahrtrichtung vordere Ende des Kipphebels 39 erstreckt sich über die vordere Mitnahmerolle 15 hinweg und steht am Antriebswagen 17 vor, wobei es einen Auflaufsteg 54 bildet. Der Auflaufsteg 54 weist eine vom freien Ende ausgehende nach hinten unten schräg verlaufende Auflaufschräge 57 auf, die beim Auffahren auf einen in Fahrtrichtung vorderen Wagen 1 mit einem von diesem vorderen Wagen nach hinten abstehende, starr ausgebildete Auflauframpe 58 zusammenwirkt, indem der Auflaufsteg 54 mit seiner Auflaufkante 57 auf die Auflauframpe 58 gleitet. Hierdurch wird der Auflaufsteg 54 angehoben und eine die arretierende Stellung entriegelnde Schwenkbewegung des Kipphebels 39 bewirkt.

Wesentlich ist hierbei, daß durch das Zusammenstoßen des Auflaufstegs 54 mit der Auflauframpe 58 der Auflaufsteg 54 nach oben gedrückt wird und die Schwenkbewegung des Kipphebels 39 um die Kipphebelachse 45 bewirkt, wodurch die beiden Mitnahmerollen 15 entarretiert bzw. entriegelt werden. Beim Zusammenstoßen bzw. Aneinanderfahren zweier Wagen 1 rutscht der Auflaufsteg 54 des hinteren Wagens 1 um einen bestimmten Weg 59 auf die Auflauframpe 58 des vorderen Wagens 1, bis die beiden Wagen 1 mit ihren Tragplatten 23, die am hinteren Wagen nach vorne überstehen, aneinanderstoßen. Der Gleitweg 59 ist somit durch die Tragplatten 23 auf eine definierte Länge, bspw. 5 - 6 mm, begrenzt.

Beim Auflösen eines Staus wird der vordere Wagen 1 vom hinteren Wagen 1 durch das Band 3 weggezogen, wobei der Auflaufsteg 54 des hinteren Wagens 1 von der Auflauframpe 58 des vorderen Wagens 1 gleitet und wiederum den definierten Gleitweg 59 auf der Auflauframpe 58 zurücklegt. Erst nach dem vollständigen Abgleiten des Auflaufstegs 54 von der Auflauframpe 58 schwenkt der Kipphebel 39 aufgrund seines Gewichts wieder in die die Mitnahmerollen 15 arretierende, z. B. horizontale Stellung, so daß die Reibineingriffnahme mit dem Band 3 wieder hergestellt wird. Durch das Verrutschen des Auflaufstegs 54 entlang des Abzugweges 59 verzögert sich somit die erneute Arretierung um eine bestimmte Zeitdauer Δt bezüglich des Zeitpunktes der Arretierung bzw. Reibineingriffnahme des vorderen Wagens 1 mit dem Band 3. Diese Zeitverzögerung um Δt hat zur Folge, daß bei einer Auflösung eines Staus nicht alle Wagen 1 gleichzeitig mit dem Band 3 in Eingriff treten, sondern die Wagen 1 nacheinander mit einem bestimmten zeitlichen Abstand Δt an das Band 3 gekoppelt werden. Somit wird das Band 3 beim Auflösen eines Staues jeweils nur mit der Beschleunigungsarbeit für einen einzigen Wagen 1 beaufschlagt, da erst nachdem sich ein bestimmter Abstand zwischen zwei aufeinanderfolgende Wagen 1 eingestellt hat, der nachfolgende Wagen 1 beschleunigt wird.

Dadurch, daß der Auflaufsteg 54 auf der Auflauframpe 58 entlang dem Gleitweg bzw. Abzugweg 59 verschoben werden kann, ohne sofort in seine horizontale Stellung überzugehen, wird die die Rollen 15 nicht arretierende Stellung definiert eingenommen, wobei der Übergang in die andere Stellung einem kurzen Umschalten entspricht.

Die Wagen 1 können mit einer einfachen Betätigungseinrichtung für die Schwenkeinrichtung an einer vorbestimmten Stelle der Schienen 2 angehalten werden, wobei z. B. ein Schwenkarm in den Fahrweg des Wagens 1 geschwenkt wird, so daß der Auflaufsteg 54 an den Schwenkarm anstößt und angehoben wird. Hierdurch werden die Mitnahmerollen 15 entarretiert, wodurch der Wagen 1 vom Band 3 entkoppelt wird, so daß auf den Wagen 1 kein Antriebsmoment übertragen wird. Der entkoppelte Wagen 1 wird durch den Schwenkarm angehalten, wobei vom Schwenkarm nur ein geringes Kraftmoment aufgebracht werden muß.

Die Erfindung ist nicht auf die oben dargestellte Ausführungsform mit einer Reibineingriffnahme zwischen dem als Zugmittel vorgesehenen Band 3 und den Mitnahmerollen 15 beschränkt, sondern es sind auch andere zwischen dem Zugmittel und den Betriebsmitteln wirkende Koppelmechanismen bzw. Koppeleinrichtungen möglich. Beispielsweise kann das Zugmittel eine Kette sein, in die der Kipphebel 39 direkt eingreift oder anstatt des Kipphebels 39 kann auch ein vertikal ausgerichteter und vertikal verschiebbarer Stift vorgesehen sein, der mittels einer Steuereinrichtung, umfassend einen Auflaufsteg und einer Auflauframpe in einer Stauzone angehoben wird und beim Auflösen des Staus sich beispielsweise in der oben angegebenen Art und Weise senkt, so daß er zwischen die Kettenglieder der Kette eingreift und so eine kraftschlüssige Verbindung zur Kette herstellt.

Somit ist ein wesentliches der Erfindung zugrundeliegendes Prinzip, daß bei einer Auflösung eines Staus die Betriebsmittel mit zeitlichem bzw. streckenmaßigem Abstand an das Zugmittel gekoppelt werden, indem eine Steuereinrichtung für die Kopplungseinrichtung vorgesehen ist, die eine funktionelle Verbindung zwischen zwei aufeinander folgende Betriebsmittel in einem Stau herstellt, so daß das Wegfahren des in Fahrtrichtung vorderen Betriebsmittels die Kopplung an das Zugmittel des nachfolgenden Betriebsmittels zeitverzögert auslöst.

Die Steuereinrichtung kann wie im oben angegebenen Ausführungsbeispiel durch eine rein mechanische Einrichtung verwirklicht sein, wobei es aber auch mögliche ist, die zeitliche Verzögerung mittels einer elektrischen Schaltung zu steuern, die mit einem Auffahrsensor zum Wahrnehmen eines weiteren Betriebsmittels verbunden ist, das sich in Fahrtrichtung unmittelbar vor dem den Auffahrsensor aufweisenden Betriebsmittel befindet und entsprechend dem wahrgenommenen Signal eine Kopplungseinrichtung zum kraft- oder formschlüssigen Koppeln mit dem kontinuierlich angetriebenen Zugmittel ansteuert.

Die Mitnahme der Betriebsmittel an dem Zugmittel wird hierbei so gewählt, daß neben Bögen und Weichen auch Steigungen und Gefälle durchfahren werden können.

Die Erfindung kann auch mit einem seitlich neben dem Wagen 1 bzw. oberhalb der Wagen 1 angeordneten Zugmittel verwirklicht werden, beispielsweise als Hängeförderer. Ferner kann die Auflaufschräge 57 auch an der Auflauframpe 58 ausgebildet sein.

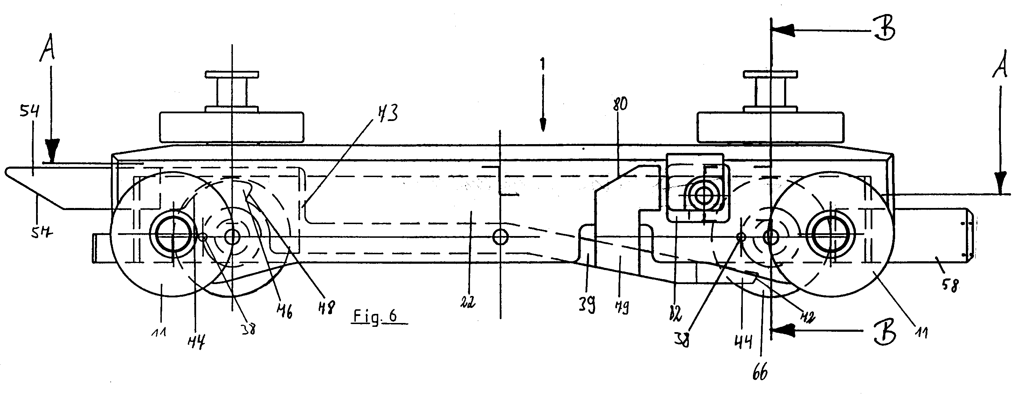

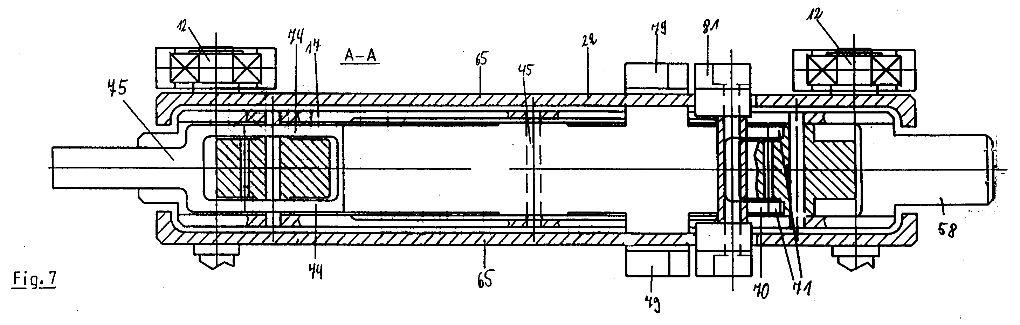

Ein weiteres Ausführungsbeispiel eines Wagens 1 für eine erfindungsgemäße Leichtgutfördereinrichtung ist in den Fig. 6 bis 8 gezeigt.

Teile, die in der Funktion mit gleichen Teilen des ersten Ausführungsbeispiels übereinstimmen, sind mit gleichen Bezugszeichen bezeichnet.

Der Wagen 1 ist wiederum zweiteilig aus einem Transportwagen 22 und einem Antriebswagen 17 ausgebildet. Der Transportwagen 22 weist vier Laufrollen 11 auf, die an zwei Achsen 12 gelagert sind. Der Transportwagen 22 ist aus einem nach unten offenen U-förmigen Profil mit einer Deckenwandung 60 und zwei Seitenwandungen 61 ausgebildet. Am in Fahrtrichtung vorderen und hinteren Endbereich des Transportwagens 22 ist an der Deckenwandung 60 jeweils eine horizontal angeordnete Führungsrolle 62 und jeweils ein die Führungsrolle 62 zentral durchgreifender und nach oben vorstehender Fixierzapfen 63 vorgesehen. An den Fixierzapfen 63 können Einrichtungen zum Aufnehmen des zu transportierenden Gutes befestigt werden. Die Führungsrollen 62 dienen dazu, den Wagen bei Bogenfahrten zu führen.

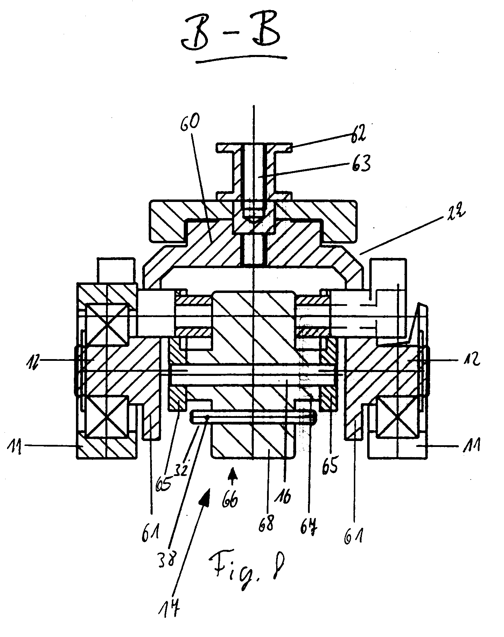

Im Gegensatz zum ersten Ausführungsbeispiel ist beim zweiten Ausführungsbeispiel der Antriebswagen 17 innerhalb des Transportwagens 22 angeordnet. Der Antriebswagen 17 weist ein Chassis mit zwei Seitenwandungen 65 auf, die an ihrem in Fahrtrichtung vorderen und hinteren Endbereich jeweils über eine Achse 16 verbunden sind, auf welcher je eine Mitnahmerolle 66 gelagert ist. Die Mitnahmerolle 66 ist einteilig aus einer zentralen, zylinderförmigen Buchse 67 und einem mittig an der Buchse 67 angeformten Rollenkörper 68 (Fig. 8) ausgebildet, der sich in Achsrichtung nur über einen Teilbereich der Buchse 67 erstreckt. Die Buchse 67 liegt an den Seitenwandungen 65 an. Im Rollenkörper 68 ist parallel zur Achse 16 ein Stift 38 eingebracht, der an beiden Seiten des Rollenkörpers 68 vorsteht und als Arretierelement 32 dient.

In der Längsmitte des Antriebwagens 17 ist eine Kipphebelachse 45 zur Lagerung eines Kipphebels 39 quer zur Fahrtrichtung angeordnet. Der Kipphebel 39 ist zwischen den Seitenwandungen 65 angeordnet und erstreckt sich in Längsrichtung, wobei er an seinem in Fahrtrichtung hinteren Ende einen Eingriffsbereich 44 in Form einer Eingriffsgabel 70 aufweist, die zum Arretieren der hinteren Mitnahmerolle 66 zwei Gabelstege 71 aufweist, die den Rollenkörper 68 der hinteren Antriebsrolle 66 umgreifen und in die Umlaufbahn des Stiftes 38 der Mitnahmerolle 66 geschwenkt werden können, so daß sie zum Arretieren der Mitnahmerolle 66 mit einer Arretierkante 72 die Umlaufbahn des Stiftes 38 blokkieren. Hierdurch ist die Antriebsrolle 66 für eine Mitnahme am Zugmittel bzw. Förderband 3 arretiert.

Im Bereich der in Fahrtrichtung vorderen Mitnahmerolle 66 ist der Kipphebel 39 mit einer Stufe 73 nach oben versetzt und aus zwei schmalen Stegen 74 ausgebildet, die im Bereich zwischen den Seitenwandungen 65 und dem Rollenkörper 68 der Mitnahmerolle 66 angeordnet sind. An dem in Fahrtrichtung vorderen Ende der Stege 74 ist ein die beiden schmalen Stege 74 verbindender und sich nach vorne erstreckender Stegkörper 75 angebunden, der mit seinem vorderen Ende einen Auflaufsteg 54 bildet und eine Auflaufschräge 57 aufweist.

Die beiden schmalen Stege 74 begrenzen eine rechteckige Öffnung, in die die Antriebsrolle 66 mit ihrem oberen Bereich ragt. Die schmalen Stege 74 weisen eine nach unten offene Ausnehmung 76 auf. Die Ausnehmung 76 ist von einer Bogenkante 77 und einer kurzen, schräg nach vorne unten verlaufenden Eingriffskante 78 begrenzt. Wird der Kipphebel 39 um die Achse 45 geschwenkt, so daß der vordere Bereich des Kipphebels 39 abgesenkt und der hintere Bereich angehoben wird, so greifen die Arretierkanten 72 und 78 in die Umlaufbahn der Stifte 38 ein, wobei die Arretierkanten 72 und 78 etwa radial zur jeweiligen Achse 16 mit einem leichten Hinterschnitt ausgerichtet sind, so daß sie von den Stiften 38 hintergriffen werden, wobei der Kipphebel 39 in der die Mitnahmerollen 66 arretierenden Stellung fixiert wird.

Etwa in der Mitte zwischen der Kipphebelachse 45 und dem in Fahrtrichtung hinteren Eingriffsbereich 44 ist am Kipphebel 39 ein quer zur Fahrtrichtung angeordneter Flügelsteg 79 angebunden, der beidseitig unter dem Antriebswagen 17 und dem Transportwagen 22 vorsteht und nach oben verlaufend abgewinkelt ist, so daß der Flügelsteg 79 im Querschnitt etwa U-förmig ausgebildet ist. An den oberen Endbereichen des U-förmigen Flügelstegs 79 sind schräg in Fahrtrichtung nach hinten ansteigende Entarretierungskanten 80 ausgebildet. Stoppelemente 81 sind in Fahrtrichtung hinter den oberen Endbereichen des U-förmigen Flügelstegs 79 angeordnet, wobei die Stoppelemente 81 jeweils eine Öffnung 82 in den Seitenwandungen 65 des Transportwagens 22 durchgreifen und am Antriebswagen 17 befestigt sind.

Bei der Ausführungsform mit Entarretierungskante 80 und Stoppelement 81 ist es möglich, einen Schwenkarm auch während des Vorbeifahrens eines Wagens 1 in den Fahrweg des Wagens 1 zu schwenken, um hierdurch den Wagen 1 anzuhalten. Der Schwenkarm sollte hierbei auf Höhe der Entarretierungskanten 80 in den Fahrweg geschwenkt werden, wodurch der Flügelsteg 79 nach unten gedrückt und der Kipphebel 39 geschwenkt wird, so daß die Eingriffsbereiche 44 aus ihrer die Mitnahmerollen 66 arretierenden Stellung geschwenkt werden. Hierdurch wird der Antrieb des Wagens 1 unterbrochen, so daß er zum Stillstand kommt. Der in den Fahrweg geschwenkte Schwenkarm liegt hierbei am Stoppelement 81 an und beaufschlagt den Flügelsteg 79 von oben, so daß der Kipphebel 39 solange in der entarretierten Stellung gehalten wird, solange der Schwenkarm in den Fahrweg geschwenkt ist.

Vorteilhaft am zweiten Ausführungsbeispiel hinsichtlich des Wagens 1 der erfindungsgemäßen Leichtgutfördereinrichtung ist, daß die Laufrollen 11 mit maximalem Längsabstand angeordnet sind, so daß der Wagen 1 eine hohe Kippfestigkeit aufweist. Ferner ist es vorteilhaft, daß die schmalen Rollenkörper 68 mittig an der Mitnahmerolle 66 angeordnet sind, so daß sie mittig mit ihrer Kontaktfläche auf einem Förderband 3 aufliegen. Durch die mittige Auflage auf dem Band 3 wird sichergestellt, daß in Kurvenfahrten der Kontakt zwischen dem Förderband 3 und den Mitnahmerollen 66 aufrechterhalten wird.

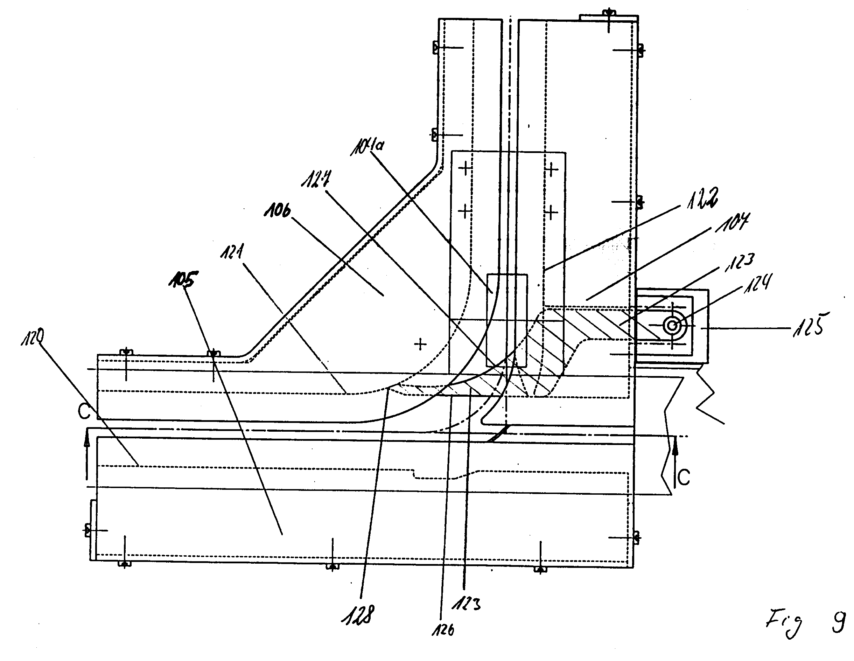

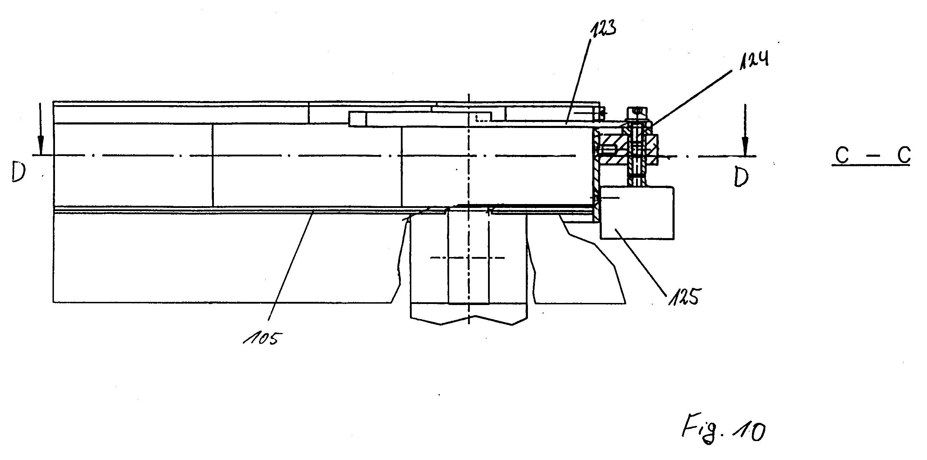

Diese Anordnung mit sehr weitem Radabstand zwischen den Laufrollen 11 und etwas kürzerem Radabstand zwischen den mittig aufliegenden Mitnahmerollen 66 ist sehr vorteilhaft für das Durchfahren von sehr engen Kurven, wie sie beispielsweise bei der in den Fig. 9 bis 11 gezeigten Weiche 100 auftreten.

Die Weiche 100 weist eine Hauptstrecke 101 und eine im rechten Winkel zur Hauptstrecke 101 angeordnete Abzweigstrecke 102 auf. Auf der Hauptstrecke 101 ist als Zugmittel ein Hauptförderband 103 angeordnet und auf der Abzweigstrecke 102 ist ein im Bereich der Abzweigstrecke um eine Umlenkrolle 104a geführtes Nebenförderband 104 vorgesehen.

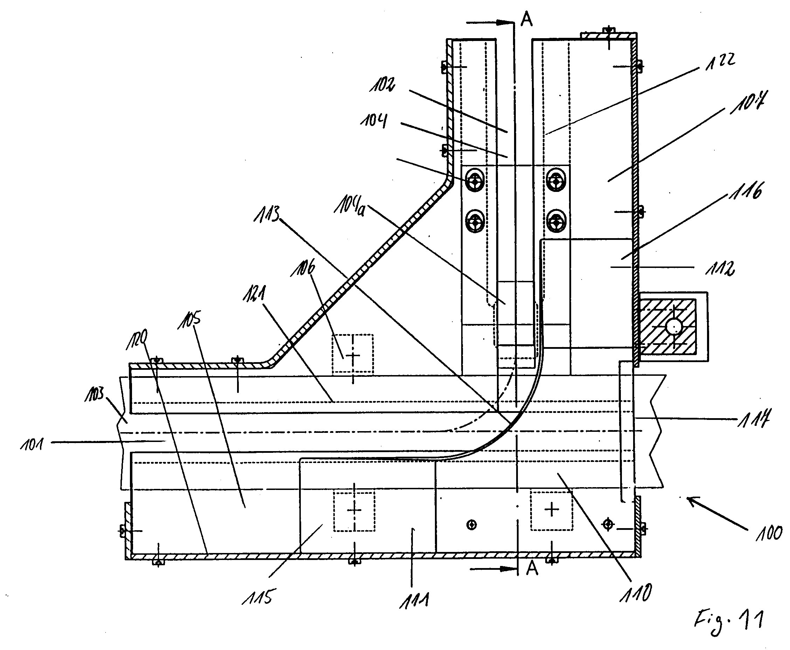

Die Förderbänder 103, 104 werden seitlich von Schienenelementen 105, 106 und 107 überlappt, auf welchen die Laufrollen 11 aufliegen (Fig. 11).

Das Schienenelement 105 ist streifenförmig ausgebildet und liegt am Hauptförderband 103 an, wobei dessen Länge etwa der eines Wagens 1 entspricht und beispielsweise 30 cm beträgt. Das Schienenelement 106 ist ein Winkelelement, das an beiden Förderbändern 103, 104 anliegt. Das Schienenelement 107 ist streifenförmig ausgebildet und längs dem Nebenförderband 104 angeordnet. Die Weiche 100 weist ein Brückenelement 110 auf, das als winkelförmige Platte mit zwei Schenkeln 111, 112 ausgebildet ist, wobei der Schenkel 111 auf dem Schienenelement 105 aufliegt und daran befestigt ist, und das andere Schenkelelement 112 sich von dem Schienenelement 105 über das Förderband 103 zum Schienenelement 107 erstreckt. Im Innenbereich weist das Winkelelement 107 eine bogenförmige Begrenzungskante 113 auf, die parallel zu einer Kurvenmittellinie 114 verläuft. Diese Kurvenmittellinie weist einen Kurvenradius von etwa 100 bis 150 cm auf.

Die Schenkel 111, 112 sind an ihren freien Enden mit allmählich ansteigenden Rampen 115, 116 ausgebildet, so daß die auf das Brückenelement 110 auffahrenden Laufrollen angehoben werden und der Wagen 1 eine Schräglage einnimmt, was das Durchfahren der Kurve beim Abzweigen erleichtert. Die bogenförmigen Begrenzungskanten 113 sind etwas abgeschrägt, so daß die Mitnahmerollen 15, 66 und die weiteren Laufrollen 11 von geradeaus fahrenden Wagen 1 auf das Brückenelement 110 auffahren können. An der in Fahrtrichtung der bogenförmigen Begrenzungskante 113 gegenüberliegenden Kante 117 ist das Brückenelement 110 abgeschrägt, so daß die Wagen 1 ohne Stufe geradeaus vom Brückenelement 110 abfahren können.

Auf Höhe der Führungsrollen 62 sind zu den Schienenabschnitten 105, 106, 107 korrespondierende Schienenelemente 120, 121, 122 angeordnet, die ein Ausscheren von der Fahrbahn der Wagen 1 verhindern.

Die Führungselemente 120, 121, 122 wirken mit einem Schwenkarm 123 zusammen, der um eine vertikale Achse 124 an einem Schwenkelement 125 befestigt ist. Das Schwenkelement 125 ist seitlich im Bereich des Schienenabschnittes 107 bzw. des Führungselementes 122 auf Höhe der Umlenkrolle 104a des Nebenförderbandes 104 befestigt. Der Schwenkarm 123 weist eine geradlinige Außenkante 126 und eine bogenförmige Innenkante 127 auf. Mit einer freien Spitze 128 liegt der Schwenkarm 123 an dem Führungselement 121 an, das den Innenbereich der durchfahrenden Kurve begrenzt. Die stellt den Geradeaus-Zustand der Weiche dar, wobei die Führungselemente 121, 122 durch die geradlinige Außenkante 126 miteinanderverbunden sind. In einem Abzweig-Zustand wird die freie Spitze 128 des Schwenkarms 123 über das Hauptförderband 103 hinweg geschwenkt, bis es mit dem Führungselement 120 in Berührung kommt, wobei die freie Spitze 128 in einer Ausnehmung 129 des Führungselementes 120 eingreift, so daß die bogenförmige Innenkante 127 eine glatte Verbindung zwischen den Führungselementen 120, 122 bildet. In diesem Abzweig-Zustand werden die Wagen 1 an der bogenförmigen Innenkante 127 entlang auf die Abzweigstrecke 102 abgelenkt, wobei die einen Außenradius abfahrenden Laufrollen 11 auf dem Brückenelement 110 das Förderband 103 queren. Hierdurch kommen die Laufrollen 11 nicht mit dem Förderband 103 in Berührung, so daß beim Abzweigen keine Querkräfte auf den Wagen 1 wirken.

## Patentansprüche

1. Leichtgutfördereinrichtung mit mehreren staubaren Betriebsmitteln (1) zur Beförderung von Leichtgut, wobei die Betriebsmittel längs einer Schiene (2) befördert werden und entlang der Schiene (2) ein kontinuierlich angetriebenes Zugmittel (3) geführt ist, wobei die Betriebsmittel mit einer Koppeleinrichtung zum kraftschlüssigen Koppeln an das Zugmittel (3) versehen sind, um eine Mitnahme des Betriebsmittels mit dem Zugmittel zu bewirken, und
eine Steuereinrichtung vorgesehen ist, die beim Auffahren eines Betriebsmittels (1) auf ein Hindernis die Koppeleinrichtung so steuert, daß das Betriebsmittel vom Zugmittel (3) entkoppelt wird,
**dadurch gekennzeichnet,**
daß die Koppeleinrichtung zumindest eine Mitnahmerolle (15) aufweist, die mit dem Zugmittel (3) ständig in Berührung steht, und daß die Steuereinrichtung so ausgebildet ist, daß beim Entfernen des Hindernisses die Mitnahmerolle (15, 66) formschlüssig arretiert wird.

2. Leichtgutfördereinrichtung nach Anspruch 1,
**dadurch gekennzeichnet,**
daß die Steuereinrichtung einen Kipphebel (39) aufweist, dessen in Fahrtrichtung (4) vorderes Ende einen Auflaufsteg (54) bildet, und der mit der Mitnahmerolle (15) funktionell in Verbindung steht, so daß er die Mitnahmerolle (15, 66) vollständig freigibt, wenn der Auflaufsteg (54) auf ein Hindernis oder eine an einem weiteren Betriebsmittel befestigte Auflauframpe (58) anstößt, und die Mitnahmerolle (15, 66) arretiert, wenn der Auflaufsteg (54) weder mit einem Hindernis noch mit einer Auflauframpe (58) in Berührung steht.

3. Leichtgutfördereinrichtung nach Anspruch 2,
**dadurch gekennzeichnet,**
daß der Kipphebel (39) zum Arretieren der Mitnahmerolle (15) in eine Umlaufbahn (40) eines drehfest mit der Mitnahmerolle (15, 66) verbundenen Arretierelements (32) eingreift, so daß das Arretierelement (32) gegen den Kipphebel (39) stößt und die Bewegung der Mitnahmerolle (15, 66) arretiert.

4. Leichtgutfördereinrichtung nach Anspruch 2 oder 3,
**dadurch gekennzeichnet,**
daß beim Auflaufen des Auflaufstegs (54) auf die Auflauframpe (58) der Auflaufsteg (54) entlang eines bestimmten Gleitwegs (59) an der Auflauframpe (58) gleitet.

5. Leichtgutfördereinrichtung nach einem der Ansprüche 2 bis 4,
**dadurch gekennzeichnet,**
daß an der Mitnahmerolle (15, 66) ein Arretierelement (32) vorgesehen ist, das bei der Drehung der Mitnahmerolle (15, 66) eine Umlaufbahn (40) beschreibt, in die der Kipphebel (39) mit einem Eingriffsbereich (44) zur Arretierung der Mitnahmerolle (15, 66) eingreifen kann, wobei mehrere Arretierelemente (32) über die Umlaufbahn (40) verteilt angeordnet sein können.

6. Leichtgutfördereinrichtung nach einem oder mehreren der Ansprüche 2 bis 5,
**dadurch gekennzeichnet,**
daß das Betriebsmittel ein Wagen (1) ist und zwei Mitnahmerollen (15, 66) aufweist, die in Fahrtrichtung (4) zueinander in Längsrichtung versetzt angeordnet sind, und der Kipphebel (39) etwa in der Längsmitte des Wagens (1) gelagert ist und zwei Ringnuteingriffsbereiche (44) zum Arretieren der Mitnahmerollen (15, 66) aufweist, wobei insbesondere die Eingriffsbereiche (44) symmetrisch um die Lagerung des Kipphebels (39) angeordnet sind.

7. Leichtgutfördereinrichtung nach Anspruch 6,
**dadurch gekennzeichnet,**
daß der Wagen (1) Laufrollen (11) aufweist, die bezüglich der Mitnahmerollen (15, 66) seitlich nach außen versetzt angeordnet sind.

8. Leichtgutfördereinrichtung nach Anspruch 6 oder 7,
**dadurch gekennzeichnet,**
daß der Wagen (1) einen Antriebswagen (17), an dem die Mitnahmerollen (15, 66) gelagert sind, und einen Transportwagen (22) aufweist, an dem die Laufrollen (11) gelagert sind, wobei Transportwagen (22) und Antriebswagen (17) lose ineinander sitzen.

9. Leichtgutfördereinrichtung nach Anspruch 1,
**dadurch gekennzeichnet,**
daß die Steuereinrichtung als elektrische Schaltung mit Zeitverzögerung ausgebildet ist.

10. Leichtgutfördereinrichtung nach einem der Ansprüche 1 bis 10,
**dadurch gekennzeichnet,**
daß die Leichtgutfördereinrichtung als Hängefördereinrichtung ausgebildet ist.

11. Leichtgutfördereinrichtung nach einem der Ansprüche 1 bis 11,
**dadurch gekennzeichnet**
daß die Wagen (1) jeweils einen Antriebswagen (17), an dem die Koppeleinrichtung ausgebildet ist, und einen Transportwagen (22) zur Aufnahme des Gutes aufweisen, wobei die Transportwagen (22) und Antriebswagen (17) lose ineinander sitzen, so daß der Antriebswagen (17) nicht durch das Gewicht des zu befördernden Gutes belastet ist.

12. Leichtgutfördereinrichtung nach Anspruch 11,
**dadurch gekennzeichnet,**
daß der Transportwagen (22) Laufrollen (11) aufweist und der Antriebswagen (17) zumindest eine Mitnahmerolle (15) aufweist, die mit dem Zugmittel in Berührung steht.

13. Leichtgutfördereinrichtung nach einem der Ansprüche 1 bis 12,
**dadurch gekennzeichnet,**
daß das Zugmittel ein Band (3) ist und das Band (3) zwischen zwei Laufflächen (5) der Schiene (2) angeordnet ist, wobei die Laufrollen (11) nur auf den Laufflächen (5) der Schiene (2) aufliegen bzw. sich daran abstützen und die Mitnahmerollen (15, 66) nur auf dem Band (3) und vorzugsweise mittig aufliegen bzw. sich daran abstützen.

14. Leichtgutfördereinrichtung nach Anspruch 13,
**dadurch gekennzeichnet,**
daß die Laufflächen (5) und das Band (3) in einer Ebene angeordnet sind.

15. Leichtgutfördereinrichtung nach Anspruch 13,
**dadurch gekennzeichnet,**
daß die Laufflächen (5) und das Zugmittel in unterschiedlichen Ebenen angeordnet sind, wobei die Schiene (2) und das an ihr geführte Zugmittel einen geschlossenen Ring bilden.

16. Leichtgutfördereinrichtung nach einem der Ansprüche 11 bis 15,
**dadurch gekennzeichnet,**
daß sowohl die Antriebswagen (17) als auch die Transportwagen (22) mit einem nach unten offenen U-förmigen Profil ausgebildet sind, wobei die Antriebswagen (17) in ihren mittigen Bereichen eine Öffnung aufweisen, in der jeweils ein Transportwagen (22) mit Spiel sitzt, und die Transportwagen (22) an ihrer Oberseite jeweils eine Tragplatte (23) zur Aufnahme des zu transportierenden Gutes aufweisen, die sich über die gesamte Länge des jeweiligen Wagens (1) erstreckt und mit dem Antriebswagen (17) nicht in Verbindung steht.

17. Leichtgutfördereinrichtung nach einem der Ansprüche 11 bis 16,
**dadurch gekennzeichnet,**
daß die Koppeleinrichtung so ausgebildet ist, daß beim Auffahren eines ersten Wagens (1) auf einen zweiten, in Fahrtrichtung (4) vorderen Wagen (1) der erste Wagen (1) vom Zugmittel entkoppelt wird, und beim Anfahren des vorderen Wagens (1) der nachfolgende Wagen (1) zeitverzögert an das Zugmittel gekoppelt wird.

18. Leichtgutfördereinrichung nach einem der Ansprüche 1 bis 17,
**dadurch gekennzeichnet,**
daß eine Steuereinrichtung vorgesehen ist, die beim Auffahren eines ersten Wagens (1) auf einen zweiten, in Fahrtrichtung (4) vorderen Wagen (1) die Koppeleinrichtung so steuert, daß der erste Wagen vom Zugmittel entkoppelt wird, und beim Anfahren des vorderen Wagens (1) die Koppeleinrichtung so steuert, daß zeitverzögert zum Anfahren des vorderen Wagens (1) der nachfolgende Wagen (1) an das Zugmittel gekoppelt wird.

19. Leichtgutfördereinrichtung nach einem der Ansprüche 1 bis 17,
**dadurch gekennzeichnet,**
daß eine Steuereinrichtung vorgesehen ist, die beim Auffahren eines ersten Wagens (1) auf einen zweiten, in Fahrtrichtung (4) vorderen Wagen (1) die Koppeleinrichtung so steuert, daß der erste Wagen (1) vom Zugmittel vollständig entkoppelt wird, so daß kein zum Antrieb des ersten Wagens (1) ausreichendes Antriebsmoment übertragen wird, und beim Anfahren des vorderen Wagens (1) die Koppeleinrichtung so steuert, daß der nachfolgende Wagen (1) an das Zugmittel gekoppelt wird.

20. Leichtgutfördereinrichtung nach Anspruch 18 oder 19,
**dadurch gekennzeichnet,**
daß die Steuereinrichtung einen in Fahrtrichtung vorne am Wagen (1) angeordneten Auflaufsteg (54) aufweist, der quer zur Fahrtrichtung bewegbar ist, und beim Auffahren von dem ersten auf den zweiten Wagen an eine am zweiten Wagen (1) befestigte Auflauframpe (58) anstößt, so daß der Auflaufsteg (54) mittels einer Auflaufschräge (57) bewegt wird und eine Entkopplung des Wagens (1) vom Zugmittel auslöst.

21. Leichtgutfördereinrichtung nach einem der Ansprüche 11 bis 20,
**dadurch gekennzeichnet,**
daß ein jeder Wagen (1) zwei Mitnahmerollen (15) aufweist, die am in Fahrtrichtung (4) vorderen bzw. hinteren Ende des Wagens (1) angeordnet sind, und ein Kipphebel (39) etwa in der Längsmitte des Wagens (1) gelagert ist und zwei Eingriffsbereiche (44) zum Arretieren der Mitnahmerollen (15) aufweist, wobei insbesondere die Eingriffsbereiche (44) symmetrisch um die Lagerung des Kipphebels (39) angeordnet sind.

22. Leichtgutfördereinrichtung nach Anspruch 11 oder 12
**dadurch gekennzeichnet,**
daß das Zugmittel eine Kette oder ein Band mit Öffnungen in regelmäßigen Abständen ist und die Koppeleinrichtung ein Element zum Eingreifen in das Zugmittel aufweist, um den Wagen (1) kraft- oder formschlüssig an das Zugmittel zu koppeln, wobei das Element zum Eingreifen in das Zugmittel beispielsweise ein etwa senkrecht zum Zugmittel ausgerichteter Stift ist.

23. Leichtgutfördereinrichtung nach Anspruch 11,
**dadurch gekennzeichnet,**
daß der Antriebswagen (17) als Koppeleinrichtung ein Schleifelement aufweist, das permanent am Zugmittel in Reibkontakt steht.

24. Leichtgutfördereinrichtung nach einem der Ansprüche 1 bis 21,
**dadurch gekennzeichnet,**
daß der Kipphebel am Wagen (1) seitlich nach außen geführt ist und eine Entarretierungskante (80) aufweist, die von einem in den Fahrweg schwenkbaren Schwenkarm betätigbar ist, so daß die Mitnahme des Wagens (1) vom Zugmittel gelöst wird.

25. Leichtgutfördereinrichtung nach einem der Ansprüche 1 bis 21,
**dadurch gekennzeichnet,**
daß eine Weiche (100) mit einer Hauptstrecke (101) und einer Abzweigstrecke (102) vorgesehen ist, wobei die Hauptstrecke (101) ein durchgehendes Zugmittel und ein das Zugmittel bereichsweise überbrückendes Brückenelement (110) aufweist, so daß beim Abzweigen am Wagen (1) angeordnete Laufrollen (11) nicht mit dem Zugmittel in Berührung kommen.

## Claims

1. Conveyor for materials of light weight, having a plurality of operating means (1), capable of forming a backed-up group, for conveying material of light weight, the operating means being conveyed along a rail (2) and a continuously driven traction means (3) being guided along the rail (2), the operating means being provided with a coupling device for non-positive coupling to the traction means (3) in order to bring about the entrainment of the operating means by the traction means, and a control device being provided which, when an operating means (1) moves up against an obstacle, controls the coupling device in a manner such that the operating means is uncoupled from the traction means (3), characterized in that the coupling device possesses at least one entraining roller (15) which is in constant contact with the traction means (3), and in that the control device is so designed that, when the obstacle is removed, the entraining roller (15, 66) is positively locked.

2. Conveyor for materials of light weight according to Claim 1, characterized in that the control device possesses a rocker arm (39) whose leading end, in the direction of travel (4), forms a run-up web (54) and which is in functional connection with the entraining roller (15), so that it completely releases the entraining roller (15, 66) if the run-up web (54) impacts on an obstacle or a run-up ramp (58) fixed on a further operating means, and locks the entraining roller (15, 66) if the run-up web (54) is in contact neither with an obstacle nor with a run-up ramp (58).

3. Conveyor for materials of light weight according to Claim 2, characterized in that the rocker arm (39), in order to lock the entraining roller (15), engages in a circular path (40) of a locking member (32) connected to the entraining roller (15, 66) in a manner proof against rotation, so that the locking member (32) impacts against the rocker arm (39) and arrests the movement of the entraining roller (15, 66).

4. Conveyor for materials of light weight according to Claim 2 or 3, characterized in that when the run-up web (54) runs up onto the run-up ramp (58) the run-up web (54) slides along a particular sliding path (59) on the run-up ramp (58).

5. Conveyor for materials of light weight according to one of Claims 2 to 4, characterized in that a locking member (32) is provided on the entraining roller (15, 66) and, during the rotation of the entraining roller (15, 66), describes a circular path (40) into which the rocker arm (39) can engage with an engagement area (44) in order to arrest the entraining roller (15, 66), it being possible for a plurality of locking members (32) to be distributed over the circular path (40).

6. Conveyor for materials of light weight according to one or more of Claims 2 to 5, characterized in that the operating means is a carriage (1) and possesses two entraining rollers (15, 66) which are arranged offset lengthwise relative to each other in the direction of travel (4), and the rocker arm (39) is mounted approximately at mid-length of the carriage (1) and possesses two annular groove engagement areas (44) for arresting the entraining rollers (15, 66), the engagement areas (44) being arranged, in particular, symmetrically about the mounting of the rocker arm (39).

7. Conveyor for materials of light weight according to Claim 6, characterized in that the carriage (1) possesses running rollers (11) which are arranged offset laterally outwards relative to the entraining rollers (15, 66).

8. Conveyor for materials of light weight according to Claim 6 or 7, characterized in that the carriage (1) is a driving carriage (17), on which the entraining rollers (15, 66) are mounted, and possesses a transport carriage (22) on which the running rollers (11) are mounted, the transport carriage (22) and driving carriage (17) resting freely one in the other.

9. Conveyor for materials of light weight according to Claim 1, characterized in that the control device is designed as an electrical circuit with a time delay.

10. Conveyor for materials of light weight according to one of Claims 1 to 10, characterized in that the conveyor for materials of light weight is designed as a suspension conveyor.

11. Conveyor for materials of light weight according to one of Claims 1 to 11, characterized in that the carriages (1) in each case possess a driving carriage (17), on which the coupling device is formed, and a transport carriage (22) for receiving the material, the transport carriage (22) and driving carriage (17) resting freely one in the other, so that the driving carriage (17) is not burdened by the weight of the material to be conveyed.

12. Conveyor for materials of light weight according to Claim 11, characterized in that the transport carriage (22) possesses running rollers (11) and the driving carriage (17) possesses at least one entraining roller (15) which is in contact with the traction means.

13. Conveyor for materials of light weight according to one of Claims 1 to 12, characterized in that the traction means is a belt (3) and the belt (3) is arranged between two running surfaces (5) of the rail (2), the running rollers (11) bearing only on the running surfaces (5) of the rail (2), or being supported thereon, and the entraining rollers (15, 66) bearing only and preferably centrally on the belt (3) or being supported thereon.

14. Conveyor for materials of light weight according to Claim 13, characterized in that the running surfaces (5) and the belt (3) are arranged in one plane.

15. Conveyor for materials of light weight according to Claim 13, characterized in that the running surfaces (5) and the traction means are arranged in different planes, the rail (2) and the traction means guided thereon forming a continuous ring.

16. Conveyor for materials of light weight according to one of Claims 11 to 15, characterized in that both the driving carriage (17) and the transport carriage (22) are designed with a downwardly open U-shaped profile, the driving carriages (17) possessing an aperture in their central areas in which, in each case, a transport carriage (22) rests with play, and the transport carriages (22) each have a bearing plate (23) on their upper sides to receive the material to be transported, which bearing plate extends over the entire length of the carriage (1) in question and is not in connection with the driving carriage (17).

17. Conveyor for materials for light weight according to one of Claims 11 to 16, characterized in that the coupling device is so designed that, when a first carriage (1) runs up against a second carriage (1) which is ahead of it in the direction of travel (4), the first carriage (1) is uncoupled from the traction means and, when the front carriage (1) begins moving, the subsequent carriage (1) is coupled to the traction means with a time delay.

18. Conveyor for materials of light weight according to one of Claims 1 to 17, characterized in that a control device is provided which, when a first carriage (1) runs up against a second carriage (1) which is ahead of it in the direction of travel (4), controls the coupling device so that the first carriage is uncoupled from the traction means and, when the front carriage (1) begins moving, controls the coupling means so that the second carriage (1) is coupled to the traction means with a time delay after the front carriage (1) begins moving.

19. Conveyor for materials of light weight according to one of Claims 1 to 17, characterized in that a control device is provided which, when a first carriage (1) runs up against a second carriage (1) which is ahead of it in the direction of travel (4), controls the coupling device so that the first carriage (1) is completely uncoupled from the traction means, so that no drive torque sufficient to drive the first carriage (1) is transmitted, and when the front carriage (1) begins moving controls the coupling device so that the subsequent carriage (1) is coupled to the traction means.

20. Conveyor for materials of light weight according to Claim 18 or 19, characterized in that the control device possesses a run-up web (54) arranged at the front of the carriage (1) in the direction of travel and moveable transversely to the direction of travel and, when the first carriage runs up against the second carriage, impacts upon a run-up ramp (58) fixed on the second carriage (1), so that the run-up web (54) is moved by means of a run-up slope (57) and triggers an uncoupling of the carriage (1) from the traction means.

21. Conveyor for materials of light weight according to one of Claims 11 to 20, characterized in that each carriage (1) possesses two entraining rollers (15) which are arranged respectively at the front and rear ends of the carriage (1) in the direction of travel (4), and a rocker arm (39) is mounted at approximately mid-length of the carriage (1) and possesses two engagement areas (44) for arresting the entraining rollers (15), the engagement areas (44) being, especially, arranged symmetrically about the mounting of the rocker arm (39).

22. Conveyor for materials of light weight according to Claim 11 or 12, characterized in that the traction means is a chain or a belt having apertures at regular intervals and the coupling device has a member for engaging into the traction means, in order to couple the carriage (1) to the traction means by non-positive or positive fitting, the member for engaging into the traction means being, for example, a pin oriented approximately perpendicularly to the traction means.

23. Conveyor for materials of light weight according to Claim 11, characterized in that the driving carriage (17) possesses, as a coupling device, a grinding member which is permanently in frictional contact with the traction means.

24. Conveyor for materials of light weight according to one of Claims 1 to 21, characterized in that the rocker arm on the carriage (1) is guided laterally outwards and possesses an unlocking edge (80) which can be actuated by a pivot arm, capable of pivoting into the path of travel, so that the entrainment of the carriage (1) by the traction means is released.

25. Conveyor for materials of light weight according to one of Claims 1 to 21, characterized in that a set of points (100), having a main line (101) and a branch line (102) is provided, the main line (101) possessing a through traction means and a bridge member (110) bridging the traction means in some areas, so that running rollers (11) arranged on the carriage (1) cannot come into contact with the traction means when branching off.

## Revendications

1. Dispositif transporteur pour produit léger, comprenant plusieurs éléments travaillants (1) pouvant être arrêtés, pour le transport d'un produit léger, dans lequel les éléments travaillants sont transportés le long d'une voie (2), et un élément de traction (3) circule continuellement le long de la voie (2), les éléments travaillants étant munis d'un dispositif d'accouplement servant à les accoupler à l'élément de traction (3), par action de force, afin de déterminer un entraînement de l'élément travaillant avec l'élément de traction, et
il est prévu un dispositif de commande qui, lors de l'impact d'un élément travaillant (1) contre un obstacle, commande le dispositif d'accouplement de manière que l'élément travaillant soit désaccouplé de l'élément de traction (3),
caractérisé en ce que le dispositif d'accouplement comprend au moins un galet d'entraînement (15) qui est en contact permanent avec l'élément de traction (3) et en ce que le dispositif de commande est configuré de manière que, lorsque l'obstacle est écarté, le galet d'entraînement (15, 66) soit bloqué par sûreté de forme.

2. Dispositif transporteur pour produit léger selon la revendication 1, caractérisé en ce que le dispositif de commande comprend un levier basculant (39), dont l'extrémité avant, par référence au sens (4) de la marche, forme une barre de relevage (54) et qui est en liaison fonctionnelle avec le galet d'entraînement (15), de telle manière qu'il libère entièrement le galet d'entraînement (15, 66) lorsque la barre de relevage (54) bute contre un obstacle ou contre une rampe (58) fixée à un autre élément travaillant, et le galet d'entraînement (15, 66) est bloqué lorsque la barre de relevage (54) n'est en contact ni avec un obstacle ni avec une rampe (58).

3. Dispositif transporteur pour produits légers selon la revendication 2, caractérisé en ce que, pour bloquer le galet d'entraînement (15), le levier basculant (39) s'engage dans une trajectoire (40) d'un élément de blocage (32) relié solidairement en rotation au galet d'entraînement (15, 66), de sorte que l'élément de blocage (32) bute contre le levier basculant (39) et arrête le mouvement du galet d'entraînement (15, 66).

4. Dispositif transporteur pour produit léger selon la revendication 2 ou 3, caractérisé en ce que, lors de la montée de la barre de relevage (54) sur la rampe (58), la barre de relevage (54) glisse le long d'une glissière (59) formée sur la rampe (58).

5. Dispositif transporteur pour produit léger selon l'une des revendications 2 à 4, caractérisé en ce que, sur le galet d'entraînement (15, 66), est prévu un élément de blocage (32) qui, lors de la rotation du galet d'entraînement (15, 66), décrit une trajectoire (40) dans laquelle le levier basculant (39) peut s'engager par une région d'engagement (44) pour bloquer le galet d'entraînement (15, 66), plusieurs éléments de blocage (32) pouvant être disposés répartis sur la trajectoire (40).

6. Dispositif transporteur pour produit léger selon l'une ou plusieurs des revendications 2 à 5, caractérisé en ce que l'élément travaillant est un chariot (1) et présente deux galets d'entraînement (15, 66) qui sont disposés décalés longitudinalement l'un par rapport à l'autre dans le sens de la marche, et le levier basculant (39) est tourillonné à peu près au milieu de la longueur du chariot (1) et présente deux régions d'engagement de gorges annulaires (44) pour bloquer les galets d'entraînement (15, 66), les régions d'engagement (44) étant en particulier disposées symétriquement de part et d'autre du tourillonnement du levier basculant (39).

7. Dispositif transporteur pour produit léger selon la revendication 6, caractérisé en ce que le chariot (1) présente des galets de roulement (11) qui sont déportés latéralement vers l'extérieur par rapport aux galets d'entraînement (15, 66).

8. Dispositif transporteur pour produit léger selon la revendication 6 ou 7, caractérisé en ce que le chariot (1) présente un chariot d'entraînement (17), sur lequel sont tourillonnés les galets d'entraînement (15, 66), et un chariot de transport (22) sur lequel sont tourillonnés les galets de roulement (11), le chariot de transport (22) et le chariot d'entraînement (17) étant logés l'un à l'intérieur de l'autre, sans solidarisation.

9. Dispositif transporteur pour produit léger selon la revendication 1, caractérisé en ce que le dispositif de commande est constitué par un circuit électrique avec retard de temps.

10. Dispositif transporteur pour produit léger selon l'une des revendications 1 à 10, caractérisé en ce que le dispositif transporteur pour produit léger est constitué par un dispositif transporteur suspendu.

11. Dispositif transporteur pour produit léger selon l'une des revendications 1 à 11, caractérisé en ce que les chariots (1) comprennent chacun un chariot d'entraînement (17) sur lequel le dispositif d'accouplement est formé, et un chariot de transport (22) destiné à recevoir le produit, le chariot de transport (22) et le chariot d'entraînement (17) étant disposés l'un à l'intérieur de l'autre, sans solidarisation, de telle manière que le chariot d'entraînement (17) ne soit pas chargé par le poids du produit à transporter.

12. Dispositif transporteur pour produit léger selon la revendication 11, caractérisé en ce que le chariot de transport (22) présente des galets de roulement (11) et le chariot d'entraînement (17) présente au moins un galet d'entraînement (15), qui est en contact avec l'élément de traction.

13. Dispositif transporteur pour produit léger selon l'une des revendications 1 à 12, caractérisé en ce que l'élément de traction est une bande (3) et la bande (3) est disposée entre deux surfaces de roulement (5) de la voie (2), les galets de roulement (11) reposant ou prenant appui exclusivement sur les surfaces de roulement (5) de la voie (2), et les galets d'entraînement (15, 66) reposant ou prenant appui exclusivement sur la bande (3) et de préférence en position centrale.

14. Dispositif transporteur pour produit léger selon la revendication 13, caractérisé en ce que les surfaces de roulement (5) et la bande (3) sont disposées dans un même plan.

15. Dispositif transporteur pour produit léger selon la revendication 13, caractérisé en ce que les surfaces de roulement (5) et l'élément de traction sont disposés dans des plans différents, la voie (2) et l'élément de traction qui circule le long de celle-ci formant un anneau fermé.

16. Dispositif transporteur pour produit léger selon l'une des revendications 11 à 15, caractérisé en ce qu'aussi bien les chariots d'entraînement (17) que les chariots de transport (22) sont construits avec un profilé en forme de U s'ouvrant vers le bas, les chariots d'entraînement (17) présentant, dans leurs régions centrales, une ouverture dans laquelle un chariot de transport (22) est logé avec jeu, et les chariots de transport (22) présentant, chacun sur leur face supérieure, une plaque porteuse (23) destinée à recevoir le produit à transporter, laquelle s'étend sur toute la longueur du chariot (1) correspondant et n'est pas en liaison avec le chariot d'entraînement (17).

17. Dispositif transporteur pour produit léger selon l'une des revendications 11 à 16, caractérisé en ce que le dispositif d'accouplement est construit de manière que, lors de l'impact d'un premier chariot (1) contre un deuxième chariot (1), situé en avant dans le sens de la marche (4), le premier chariot (1) soit désaccouplé de l'élément de traction et que, lors du démarrage du chariot (1) avant, le chariot (1) suivant soit accouplé à l'élément de traction de façon retardée dans le temps.

18. Dispositif transporteur pour produit léger selon l'une des revendications 1 à 17, caractérisé en ce qu'il est prévu un dispositif de commande qui, lors de l'impact d'un premier chariot (1) contre un deuxième chariot (1) situé en avant dans la direction de la marche (4), commande le dispositif d'accouplement de telle manière que le premier chariot soit désaccouplé de l'élément de traction et, lors du démarrage du chariot (1) avant, commande le dispositif d'accouplement de telle manière que le chariot (1) suivant soit accouplé à l'élément de traction, avec retard de temps par rapport au démarrage du chariot (1) avant.

19. Dispositif transporteur pour produit léger selon l'une des revendications 1 à 17, caractérisé en ce qu'il est prévu un dispositif de commande qui, lors de l'impact d'un premier chariot (1) contre un deuxième chariot (1) situé en avant dans le sens de la marche (4), commande le dispositif d'accouplement de telle manière que le premier chariot (1) soit entièrement désaccouplé de l'élément de traction, de sorte qu'aucun couple d'entraînement suffisant pour entraîner le premier chariot (1) n'est alors transmis et, lors du démarrage du chariot (1) avant, commande le dispositif d'accouplement de manière que le chariot (1) suivant soit accouplé à l'élément de traction.

20. Dispositif transporteur pour produit léger selon la revendication 18 ou 19, caractérisé en ce que le dispositif de commande présente une barre de relevage (54) disposée sur le chariot (1), à l'avant dans le sens de la marche, et qui peut se déplacer transversalement au sens de la marche et, lors de l'impact du premier chariot contre le deuxième chariot, bute contre une rampe (58) fixée au deuxième chariot (1), de sorte que la barre de relevage (54) est déplacée au moyen d'un chanfrein de montée (57) et déclenche un désaccouplement du chariot (1) par rapport à l'élément de traction.

21. Dispositif transporteur pour produit léger selon l'une des revendications 11 à 20, caractérisé en ce que chaque chariot (1) présente deux galets d'entraînement (15) qui sont disposés à l'extrémité avant et à l'extrémité arrière du chariot (1), par référence au sens de la marche (4), et un levier basculant (39) est tourillonné à peu près au milieu de la longueur du chariot (1) et présente deux régions d'engagement (44) pour bloquer les galets d'entraînement (15), les régions d'engagement (4) étant en particulier disposées symétriquement de part et d'autre du tourillonnement du levier basculant (39).

22. Dispositif transporteur pour produit léger selon la revendication 11 ou 12, caractérisé en ce que l'élément de traction est une chaîne ou une bande présentant des ouvertures à des écartements réguliers, et le dispositif d'accouplement comprend un élément destiné à l'engagement dans l'élément de traction, pour accoupler le chariot (1) à l'élément de traction par une liaison, par action de force ou par sûreté de forme, l'élément destiné à l'engagement dans l'élément de traction étant, par exemple, une cheville orientée à peu près perpendiculairement à l'élément de traction.

23. Dispositif transporteur pour produit léger selon la revendication 11, caractérisé en ce que le chariot d'entraînement (17) présente, en tant que dispositif d'accouplement, un élément de frottement qui est en permanence en contact de frottement avec l'élément de traction.

24. Dispositif transporteur pour produit léger selon l'une des revendications 1 à 21, caractérisé en ce que le levier basculant est guidé latéralement vers l'extérieur sur le chariot (1), et présente un bord de déblocage (80) qui peut être actionné par un bras pivotant monté pivotant sur la trajectoire, de manière que l'entraînement du chariot (1) par l'élément de traction soit supprimé.

25. Dispositif transporteur pour produit léger selon l'une des revendications 1 à 21, caractérisé en ce qu'il est prévu un aiguillage (100) comprenant une voie principale (101) et une voie d'embranchement (102), la voie principale (101) présentant un élément de traction continu et un élément de pont (110) qui forme par endroits un pont au-dessus de l'élément de traction, de sorte que, lors de la déviation, les galets de roulement (11) montés sur le chariot (1) n'entrent pas en contact avec l'élément de traction.
